# EUROPÄISCHE PATENTANMELDUNG

(11) **EP 2 293 346 A2**
(43) Veröffentlichungstag der Anmeldung: **09.03.2011**
(21) Anmeldenummer: 10008783.2
(22) Anmeldetag: 24.08.2010
(51) Int. Cl.: H01L 31/042

(54) **Befestigungsvorrichtung für Photovoltaik-, Solar- und/oder Hybridmodule**

(30) Priorität: 07.09.2009 DE 102009040223
(71) Anmelder: Sossalla, Bernhard, 73207 Plochingen (DE)
(72) Erfinder: Sossalla, Bernhard, 73207 Plochingen (DE)
(74) Vertreter: Lenzing Gerber Stute

(57) **Zusammenfassung**

Die Erfindung betrifft eine Befestigungsvorrichtung für mindestens ein Photovoltaik-, Solar- und/oder Hybridmodul (5), ein insbesondere federndes Abstandselement (1) aufweisend, über das das mindestens eine Photovoltaik-, Solar- doer Hybridmodul (5) an einem Untergrund, insbesondere einem Dach, beabstandet befestigbar ist, wobei ein, insbesondere plattenförmiger, Grundkörper (2) an dem Abstandelement (1) befestigt oder mit diesem, insbesondere einstückig, verbunden ist, und an dem Grundkörper (2) mindestens ein Befestigungsmittel (3) lösbar befestigt oder befestigbar ist, und das Befestigungsmittel (3) mit mindestens einem Photovoltaik-, Solar- und/oder Hybridmodul (5) verklebt oder verklebbar ist.

## Beschreibung

Die vorliegende Erfindung betrifft eine Befestigungsvorrichtung für Photovoltaik-, Solar- und/oder Hybridmodule.

Sofern Photovoltaik-, Solar- und/oder Hybridmodule an einem Untergrund, wie z.B. einem Dach, befestigt werden, werden hierfür häufig auch Klebstoffe eingesetzt. Bei den heute bekannten Verklebungen von Photovoltaik- und Solarmodulen ist die Demontage der Module jedoch ohne eine Beschädigung der Module nicht möglich. Dies führt bei Garantieansprüchen gegenüber dem Hersteller oder Lieferanten zu erheblichen Problemen, da das Modul bei der Demontage verletzt oder beschädigt wird. Sofern die Module aneinanderhängend auf einer gemeinsamen Grundplatte verklebt sind, ist eine Beschädigung der Module bei ihrer Demontage nicht zu verhindern.

Oft werden die Module auch auf Schienen mittels Modulklemmen befestigt. Auch bei dieser Art der Befestigung kommt es sehr häufig zum Glasbruch.

Sofern nachfolgend von einem oder mehreren Modulen die Rede ist, sind stets Photovoltaik-, Solar- oder Hybridmodule gemeint.

Aufgabe der vorliegenden Erfindung ist es, eine Befestigungsvorrichtung bereitzustellen, durch die Photovoltaik-, Solar-und/oder Hybridmodule einfach an einem Untergrund befestigbar sind und zudem eine Demontage einzelner Module ohne Beschädigung der übrigen Module möglich ist.

Diese Aufgabe wird erfindungsgemäß mit einer Befestigungsvorrichtung nach dem Patentanspruch 1 gelöst. Vorteilhafte Ausgestaltungen dieser Befestigungsvorrichtung ergeben sich durch die Merkmale der Unteransprüche.

Der Erfindung liegt der Gedanke zugrunde, dass die Module sicher verklebt werden können. Die Verklebung erfolgt jedoch an einzelnen Befestigungsmitteln, die ihrerseits lösbar an einem Grundkörper befestigbar sind. Sowohl die Befestigungsmittel als auch der Grundkörper können als Platten ausgebildet sein. In einer bevorzugten Ausführungsform wird jedes Befestigungsmittel mit mindestens einer Schraube an dem Grundkörper befestigt. Zur Demontage eines Moduls müssen somit lediglich die Verbindungen mit dem Grundkörper aller mit dem Modul verklebten Befestigungsmittel gelöst werden. Das jeweilige Modul ist dann ohne Probleme aus dem Systemverbund aller Module herausnehmbar und wieder montierbar oder durch ein neues Modul zu ersetzen.

Die Befestigungsmittel sind vorteilhaft in verschiedenen Positionen am Grundkörper befestigbar. So weist der Grundkörper an den Stellen, an denen ein Befestigungsmittel, befestigbar ist, Langlöcher oder größere Öffnungen auf, durch die insbesondere Befestigungsschrauben druchsteckbar sind. Die Schrauben sind in den Langlöchern oder größeren Öffnungen, die einen Durchmesser aufweisen, der größer ist als der Schraubendurchmesser, quer zur Schraubenachse verschiebbar. Auch können zusätzlich oder alternativ die Befestigungsmittel mit Langlöchern für die Befestigungsschrauben versehen werden. Die korrespondierenden Langlöcher des Grundkörpers und des Befestigungsmittels können dabei vorteilhaft senkrecht zueinander ausgerichtet sein, so dass eine Positionierung des Befestigungsmittels relativ zum bereits am Untergrund fest montierten Grundkörper in einer Ebene und somit eine Arretierung in beliebigen Positionen, welche lediglich durch die Länge der Langlöcher begrenzt ist, möglich ist. Hierdurch wird vorteilhaft erreicht, dass gewissen Fertigungstoleranzen und/oder Montageungenauigkeiten ausgeglichen werden können. Auch ist der Montierende nicht an ein vorgegebenes Systemraster gebunden. Auch eine Drehung des Befestigungsmittels um 360° in der Ebene des Grundkörpers ist möglich.

Der Grundkörper ist vorteilhaft mittels eines Abstandselements in einem vorbestimmbaren Abstand zum Untergrund gehalten. Die Länge des Abstandselements ist dabei dem jeweils einzurichtenden Abstand anzupassen. Vorteilhaft können dem Montierenden verschieden Lange Abstandselemente zur Verfügung stehen, die er jeweils passend auswählen kann. Durch unterschiedliche axiale Längen der Abstandselemente kann der Grundkörper im optimalen oder optimierten Winkel zur Sonneneinstrahlung am Untergrund befestigt werden. Auch können die Stirnseiten des Abstandselements auf Gehrung geschnitten sein

Der Grundkörper kann auch so ausgebildet sein, dass die Module in einer optimalen Ausrichtung zur Sonneneinstrahlung am Untergrund befestigt sind. Der Grundkörper kann insbesondere als Befestigungsfläche für ein, zwei, drei oder vier Module dienen.

Vorteilhaft ist das Abstandselement als federndes Element ausgebildet. So kann das Abstandselement aus Gummi oder einem Kunststoff mit ähnlichen elastischen Eigenschaften gefertigt sein. Durch die schwingungsdämpfende Wirkung des Abstandselements, sind die Module in horizontaler, vertikaler und axialer Richtung schwimmend gelagert. Sofern als Abstandelement ein Gummielement verwendet wird, sollte dies möglichst einen Härtegrad von Standard Shore 70 aufweisen. Durch die leichte Vorspannung des Abstandselements werden vorteilhaft Schwingungen sowie auftretende Sog- und abhebende Kräfte gemindert bzw. abgefangen.

In einer einfachen Ausgestaltung ist das Abstandselement ein Zylinder mit einem Durchgangsloch, durch welches z.B. eine Befestigungsschraube durchsteckbar ist, mit der das Abstandselement zusammen mit dem Grundkörper unmittelbar am Untergrund oder an einem Montagemittel, insbesondere in Form einer Montageplatte, befestigbar ist. Das Montagemittel kann als Bodenklebeplatte ausgebildet sein, welche mittels einer Einzugsmutter mit dem Grundkörper und dem Abstandselement verbunden wird. Bei bestehenden Grundbefestigungssystemen wie Dachhaken, Stockschrauben, Aufständerungen, Blechfalze und dergleichen, wird das Abstandselement, insbesondere in Form eines Gummipuffers, direkt, d.h. ohne eine Montageplatte, auf die vorgenannten Grundbefestigungssysteme montiert.

Durch das Abstandselement wird vorteilhaft eine strömungsoptimierte Hinterlüftung der Module erreicht. Aufgrund der geringen Ausmaße der Abstandselemente kommt es zu keinem Wärmestau unter der Modulfläche. Die Höhe, Breite und Querschnittsform der Abstandselemente sind den jeweiligen Bedingungen anpassbar. Durch eine insbesondere runde Form bilden sie vorteilhaft nur einen geringen Strömungswiderstand, so dass der hinterbelüftende Luftstrom nur vernachlässigbar abgebremst wird.

Das Klebematerial zwischen Modul und Befestigungsmittel kann je nach Beanspruchung ein Ein- oder Mehrkomponentenkleber sein. Der Ausdehnungskoeffizient des Klebematerials wird dabei von den zu verklebenden Werkstoffen bestimmt und muss sich nach den statischen Anforderungen richten. Es ist sowohl eine vollflächige, sowie eine raupenförmige oder punktförmige Verklebung möglich.

Sofern die Module zueinander beabstandet an dem Grundkörper montiert sind, werden vorteilhaft der Windsog und die abhebenden Kräfte gemindert.

Durch die vorbeschriebene erfindungsgemäße Befestigungsvorrichtung wird ein schwingungsgedämpfter Klebehinterlüftungshalter für Photovoltaik- und Solarmodule bereitgestellt, mit dem ungerahmte oder gerahmte Module an Dächern oder Fassaden befestigbar sind, ohne das insbesondere die Dachhaut durchdrungen wird. Eine Leistungsminimierung der Module durch Schmutzanhäufung oder Schnee an überstehenden Modulklemmen ist ausgeschlossen, da die Module vorteilhaft mit ihrer Rückseite an der Befestigungsvorrichtung verklebt werden. Vorteilhaft erfolgt dabei die Verklebung vom Randbereich eingerückt. Die Module können beabstandet zueinander montiert werden, so dass Verunreinigungen und Schnee zwischen den Modulen durch einen Spalt abfließen können. Je nach Größe und Ausführungsform der zu befestigenden Module, können zwei oder mehr Halter für die Montage eines Moduls vorgesehen werden. Im Randbereich des Modulverbundes, wo erheblich höhere Wind- und Soglasten auftreten, kann die Befestigungsvorrichtung mit ihren zwei Befestigungsmitteln für die Befestigung des Randes eines einzigen Moduls verwendet werden. D.h. die Befestigungsmittel werden entlang des Randbereichs des Moduls ausgerichtet.

Durch die schwimmend gelagerte Klebemontage wird vorteilhaft der Glasbruch verhindert. Die erfindungsgemäße Befestigungsvorrichtung bildet einen Systemmontagehalter für alle Bestandsbefestigungen und Randbefestigungen und ist auch bei erhöhten statischen Anforderungen einsetzbar. Zudem wird durch den Einsatz der erfindungsgemäßen Befestigungsvorrichtung gegenüber herkömmlichen Befestigungssystemen Montagematerial und Montagezeit eingespart.

Die erfindungsgemäße Befestigungsvorrichtung ist zudem für alle Dachneigungen einsetzbar. Bis zur vollständigen Aushärtung des Klebstoffes kann ein insbesondere vorkomprimiertes beidseitig klebendes Fixiertape zum Einsatz kommen, welches die Module bis zur Aushärtung des Klebstoffs in Position hält. Das Fixiertape wird dabei neben dem Klebstoff zwischen Befestigungsmittel und Modulrückseite angeordnet. Sofern Kleberaupen verwendet werden, können Streifen des Fixiertapes zwischen den Raupen angeordnet werden.

Anschlag- und Abrutschmontagesicherungsbügel der Module können optional an den Befestigungsvorrichtungen angebracht werden.

Nachfolgend werden anhand von Zeichnungen mögliche Ausführungsformen der erfindungsgemäßen Befestigungsvorrichtung beschrieben.

Es zeigen:
- Fig. 1a:: Seitenansicht einer ersten möglichen Ausführungs- form einer erfindungsgemäßen Befestigungsvorrich- tung mit verklebbarer Bodenklebeplatte;
- Fig. 1b:: Draufsicht auf die Befestigungsvorrichtung gem. Fig. 1a mit teilgeschnittenem Modul;
- Fig. 1c:: Ansicht der Befestigungsvorrichtung gem. Fig. 1 von unten;
- Fig. 2:: perspektivische Ansicht einer Befestigungsvorrich- tung gem. der Figuren 1a bis 1c ohne montiertes Mo- dul;
- Fig. 3:: vergrößerte Darstellung der Seitenansicht gem. Fig. 1b;
- Fig. 4a:: Seitenansicht einer zweiten möglichen Ausführungs- form einer erfindungsgemäßen Befestigungsvorrich- tung zur Befestigung mittels Klemmschraube;
- Fig. 4b:: Draufsicht auf die Befestigungsvorrichtung gem. Fig. 4a mit teilgeschnittenem Modul;
- Fig. 4c:: Ansicht der Befestigungsvorrichtung gem. Fig. 1 von unten;
- Fig. 5:: perspektivische Ansicht einer Befestigungsvorrich- tung gem. der Figuren 4a bis 4c ohne montiertes Mo- dul;
- Fig. 6:: vergrößerte Darstellung der Seitenansicht gem. Fig. 4b;
- Fig. 7:: perspektivische Ansicht von unten auf die Grund- platte und die Befestigungsklemmschraube;
- Fig. 8:: Grundkörper mit vier Befestigungsflächen und je- weils zwei senkrecht zueinander angeordneten und sich kreuzenden Langlöchern je zugeordnetem Befes- tigungsmittel;
- Fig. 9a:: Ansicht von unten auf eine dritte mögliche Ausfüh- rungsform, bei der der Grundkörper jeweils ein Langloch zur Befestigung eines Befestigungsmittels aufweist;
- Fig. 9b:: Draufsicht auf eine Ausführungsform gem. Fig. 9a.

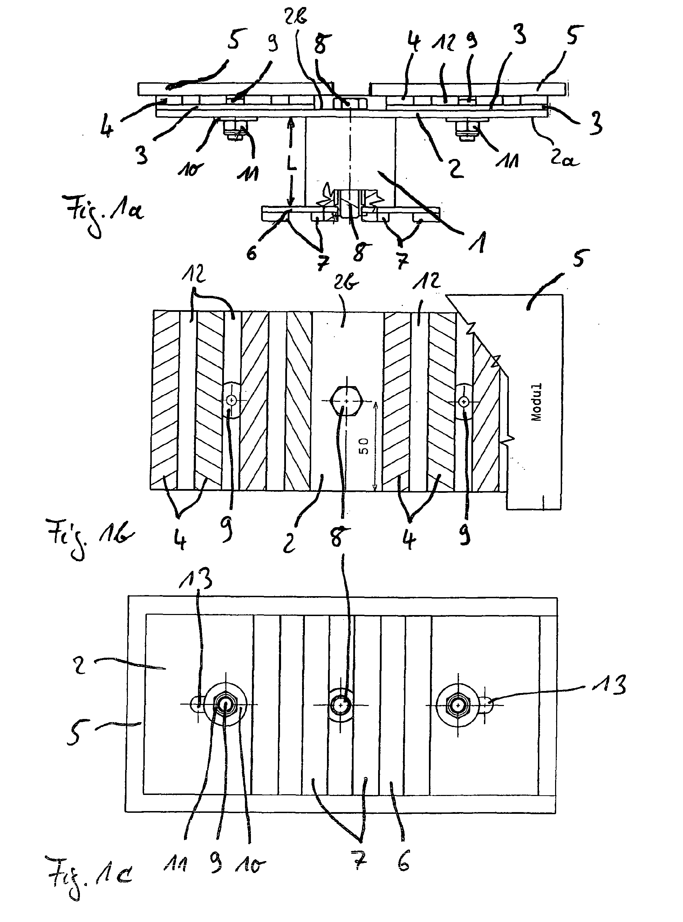

Die Figur 1a zeigt eine Seitenansicht einer ersten möglichen Ausführungsform einer erfindungsgemäßen Befestigungsvorrichtung mit verklebbarer Bodenklebeplatte 6. Die Befestigungsvorrichtung weist einen Grundkörper 2 und eine Bodenklebeplatte 6 auf, zwischen denen ein Abstandselement 1 angeordnet ist. Eine Schraube 8 hält den Grundkörper 2, das Abstandselement 1 sowie die Bodenklebeplatte 6 zusammen. Auf der Oberseite 2b des als Platte ausgebildeten Grundkörpers 2 sind mittels Schrauben 9, Unterlegscheiben 10 und Schraubenmuttern 11 Befestigungsmittel 3 befestigbar. An diesen ebenfalls plattenförmigen Befestigungsmitteln 3 können mittels Klebstoff 7 Module befestigt werden. Der Klebstoff 7 kann flächig, punktförmig oder, wie dargestellt, raupenförmig angeordnet sein. Zwischen den Raupen 7 ist jeweils ein freier Zwischenraum 12, in den der zusammengedrückte Klebstoff 7 beim Anpressen ausweichen kann. Zudem können Streifen von Fixiertape in den Zwischenräumen 12 angeordnet werden, die zum Fixieren der Module 5 während der Aushärtung des Klebstoffs 7 dienen. Die Länge L des Abstandselements 1 bestimmt letztendlich die Höhe über dem nicht dargestellten Untergrund, auf dem die Bodenklebeplatte 6 mit ihren Klebstoffraupen 7 verklebt wird. Durch Lösen der Schraubenmuttern 11 kann ein Befestigungsmittel 3 vom Grundkörper 2 gelöst und somit ein Modul demontiert werden.

Die Figur 1b zeigt eine Draufsicht auf die Befestigungsvorrichtung gemäß Figur 1a mit teilgeschnittenem Modul 5. Die Figur 1c zeigt die Befestigungsvorrichtung gemäß Figur 1 von unten, wobei die Langlöcher 13 im Grundkörper 2 sichtbar sind. Durch die Langlöcher 13 können die Befestigungsmittel 3 relativ zum Grundkörper 2 in verschiedenen Positionen mittels der Schrauben 9, 11 befestigt werden, so dass z.B. Toleranzen leicht bei der Montage der Befestigungsvorrichtung ausgeglichen werden können.

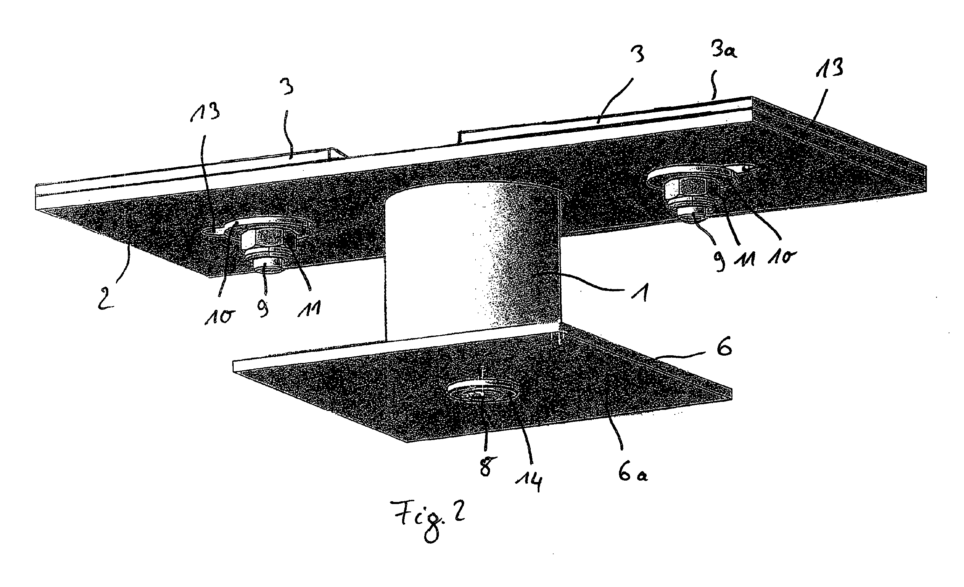

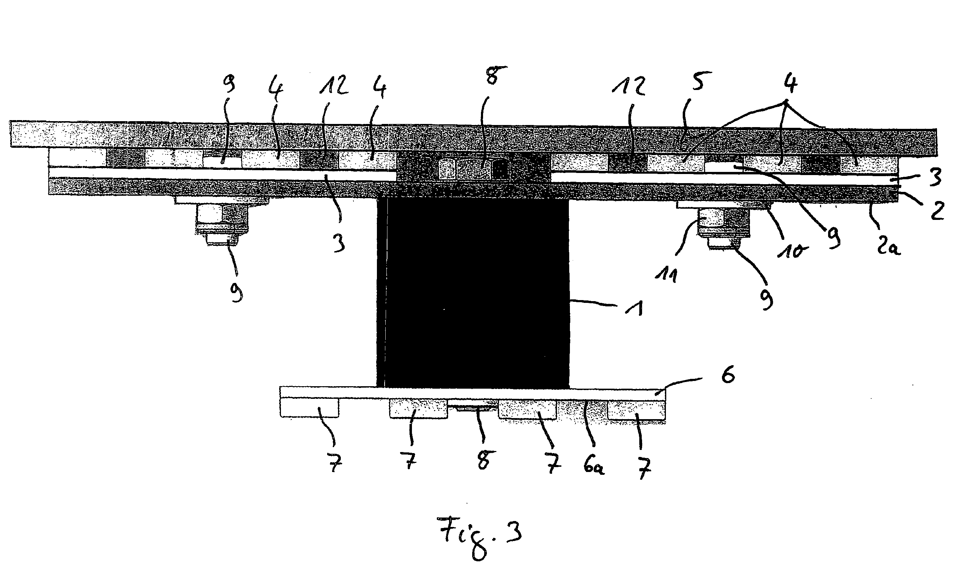

Die Figur 2 zeigt eine perspektivische Ansicht einer Befestigungsvorrichtung gemäß der Figuren 1a bis 1c ohne montierten Modul 5. Auf die Bodenklebeplatte 6 und die Befestigungsmittel 3 sind noch keine Klebstoffraupen 7 aufgetragen. Die Figur 3 zeigt eine vergrößerte Darstellung der Seitenansicht gemäß Figur 1b.

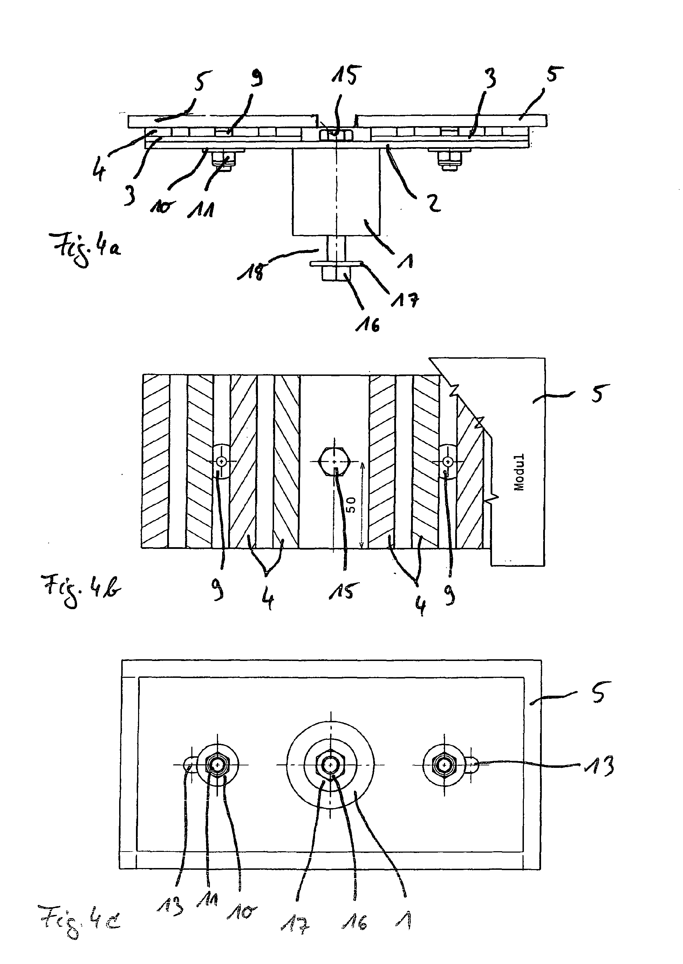

Die Figur 4a zeigt eine Seitenansicht einer zweiten möglichen Ausführungsform einer erfindungsgemäßen Befestigungsvorrichtung zur Befestigung mittels Klemmschraube 15, 16, 17. Der Grundkörper 2, sowie das Abstandselement 1 und die Befestigungsmittel 3 sind identisch zu denen der vorbeschriebenen Ausführungsform. Anstatt eine vorbeschriebene Bodenklebeplatte 6 zu verwenden, wird die Befestigungsvorrichtung gemäß der Figur 4a an einem Untergrund befestigt, welcher zwischen dem Abstandselement 1 und der Unterlegscheibe 17 in dem Zwischenraum 18 befindet und nicht dargestellt ist. Durch Anziehen der Schraube 15, 16 wird der Untergrund zwischen der Unterlegscheibe 17 und dem Abstandselement 1 eingeklemmt. Es ist selbstverständlich möglich zum Schutz des Abstandselements 1 noch eine weitere Unterlegscheibe (nicht dargestellt) anzuordnen, so dass der Untergrund zwischen den Unterlegscheiben einliegt.

Die Figur 4b zeigt eine Draufsicht und die Figur eine Ansicht auf die Unterseite der Befestigungsvorrichtung gemäß Fig. 4a.

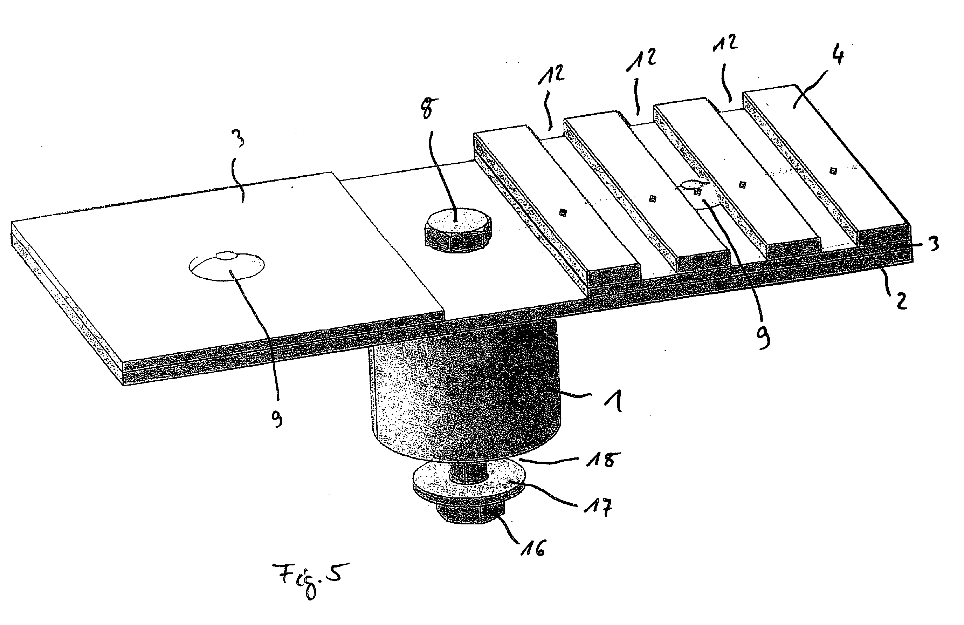

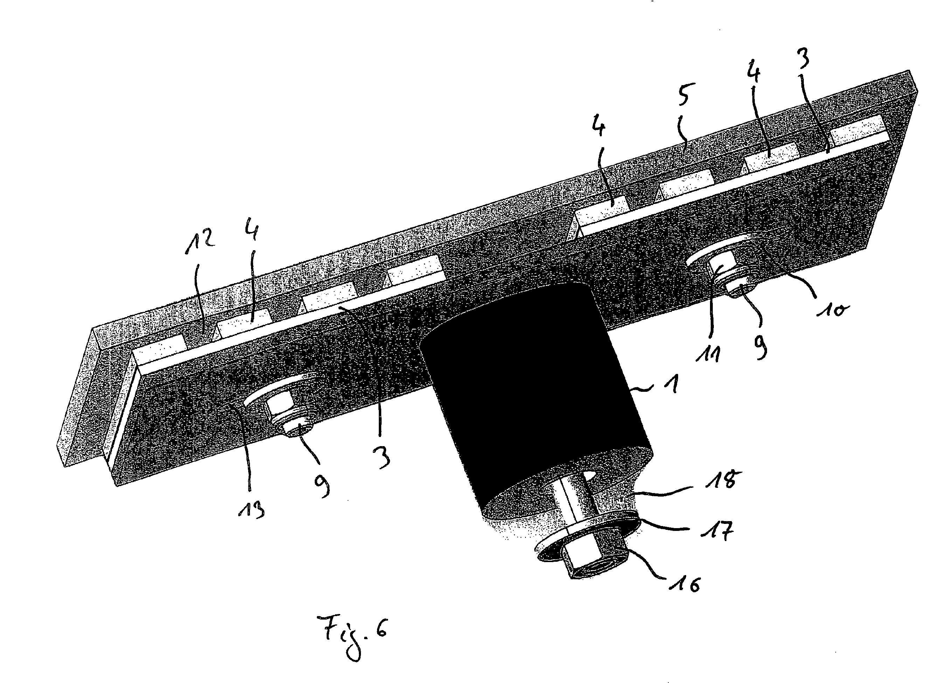

Die Figur 5 zeigt eine perspektivische Ansicht einer Befestigungsvorrichtung gemäß den Figuren 4a bis 4c ohne montierte Modul 5, wobei auf einem Befestigungsmittel 3 bereits Klebstoffraupen 7 aufgebracht sind. Die Figur 6 zeigt zum besseren Verständnis eine vergrößerte Darstellung der Seitenansicht der Befestigungsvorrichtung gemäß Figur 4b.

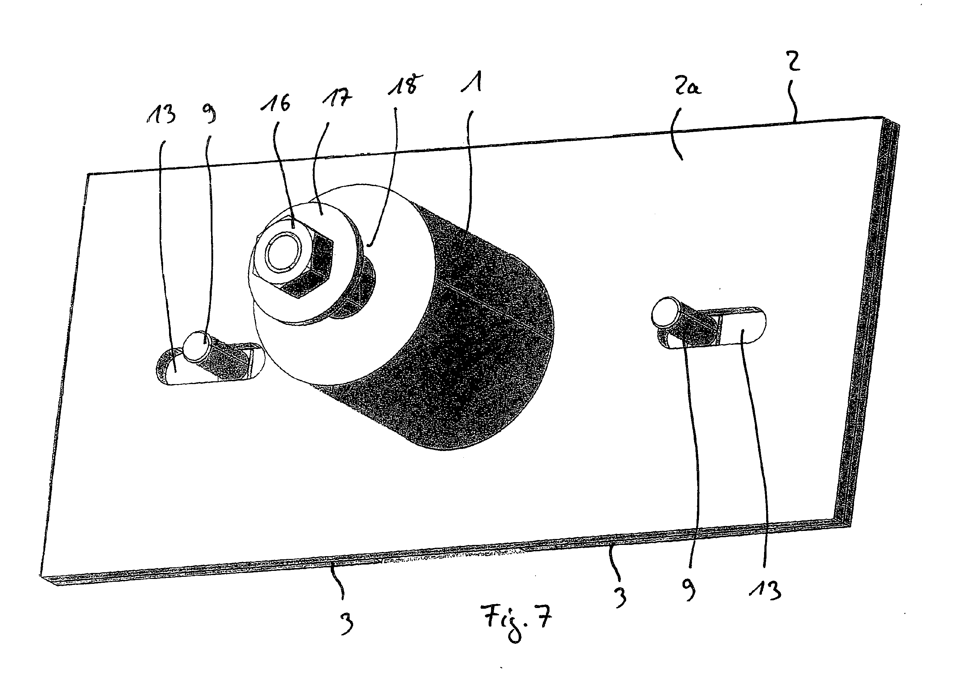

Die Figur 7 zeigt eine perspektivische Ansicht von unten auf die Grundplatte 2 und die Befestigungsklemmschraube 9. Diese durchgreift ein Langloch 13 des Grundkörpers 2, so dass die Befestigungsmittel 3 relativ zum Grundkörper 2 an diesem in verschiedenen Positionen befestigbar sind.

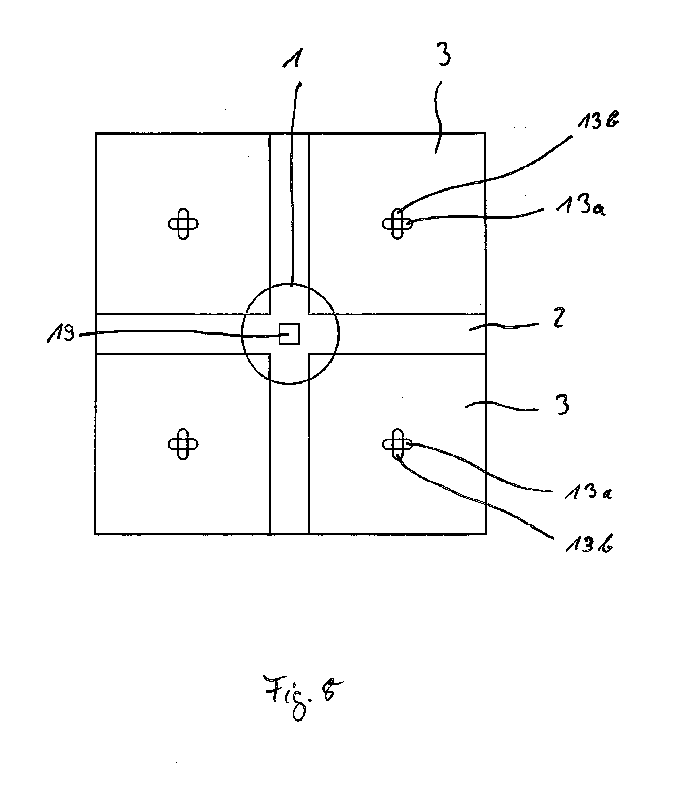

Die Figur 8 zeigt einen Grundkörper mit vier Befestigungsflächen und jeweils zwei senkrecht zueinander angeordneten und sich kreuzenden Langlöchern 13a, 13b welche jeweils einem Befestigungsmittel zugeordnet sind, so dass dieses noch flexibler an dem Grundkörper 2 befestigbar ist.

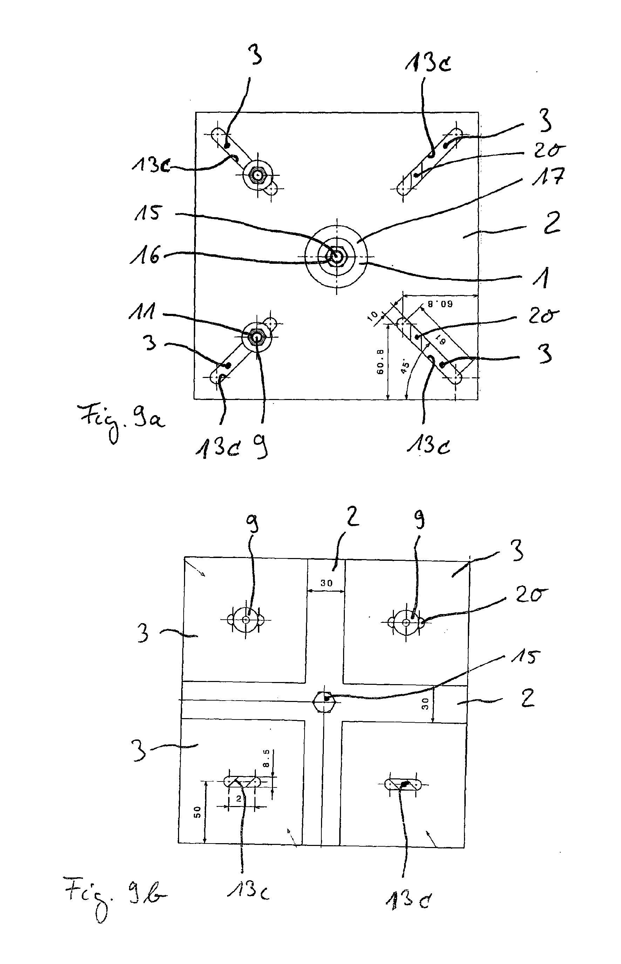

Die Figuren 9a und 9b zeigen eine weitere mögliche Ausgestaltung der Befestigungsvorrichtung, bei der der Grundkörper 2 jeweils ein Langloch 13c zur Befestigung eines der vier Befestigungsmittel 3 aufweist. Die Langlöcher 13c sind dabei im Winkel von 45° zu den Seiten des Grundkörpers ausgerichtet. Die plattenförmigen Befestigungsmittel 3 weisen ebenfalls Langlöcher 20 auf, die im Winkel zu den Langlöchern 13c des Grundkörpers angeordnet sind. So lassen sich die Befestigungsmittel 3 relativ zum Grundkörper in einer Ebene bei durchgesteckter und noch nicht fest angezogener Schraube 9, 11 positionieren und letztendlich in der gewünschten Stellung befestigen.

### Bezugszeichenliste:

- 1: Abstandselement
- 2: Grundkörper
- 2a: Unterseite des Grundkörpers
- 2b: Oberseite des Grundkörpers
- 3: Befestigungsmittel
- 3a: Oberseite des Befestigungsmittels 3
- 4: Klebstoff
- 5: Modul
- 6: Bodenklebeplatte
- 6a: Unterseite der Bodenklebeplatte
- 7: Klebstoff
- 8: Schraube
- 9: Schraube
- 10: Unterlegscheibe
- 11: Schraubenmutter
- 12: Zwischenraum zwischen Klebstoffsraupen
- 13: Langloch
- 13a: Langloch
- 13b: Langloch
- 13c: Langloch
- 14: Unterlegscheibe
- 15: Schraube
- 16: Schraubenmutter
- 17: Unterlegscheibe
- 18: Zwischenraum
- 19: Durchgriffsöffnung im Grundkörper für Schraube 8, 15

## Patentansprüche

1. Befestigungsvorrichtung für mindestens ein Photovoltaik-, Solar- und/oder Hybridmodul (5), ein insbesondere federndes Abstandselement (1) aufweisend, über das das mindestens eine Photovoltaik-, Solar- oder Hybridmodul (5) an einem Untergrund, insbesondere einem Dach, beabstandet befestigbar ist, wobei ein, insbesondere plattenförmiger, Grundkörper (2) an dem Abstandelement (1) befestigt oder mit diesem, insbesondere einstückig, verbunden ist, und an dem Grundkörper (2) mindestens ein Befestigungsmittel (3) lösbar befestigt oder befestigbar ist, und das Befestigungsmittel (3) mit mindestens einem Photovoltaik-, Solar- und/oder Hybridmodul (5) verklebt oder verklebbar ist.

2. Befestigungsvorrichtung nach Anspruch 1, **dadurch gekennzeichnet, dass** der Grundkörper (2) mittels mindestens einer Schraube (8, 15), oder Niete oder einer Verklebung mit dem Abstandselement (1) verbunden ist.

3. Befestigungsvorrichtung nach Anspruch 1 oder 2, **dadurch gekennzeichnet, dass** das Befestigungsmittel (3) mittels einer Schraubverbindung (9, 10, 11) mit dem Grundkörper (2) verbunden ist.

4. Befestigungsvorrichtung nach einem der vorhergehenden Ansprüche, **dadurch gekennzeichnet, dass** das Abstandselement (1) ein insbesondere zylindrischer Körper, der insbesondere aus Gummi gefertigt ist, ist.

5. Befestigungsvorrichtung nach einem der vorhergehenden Ansprüche, **dadurch gekennzeichnet, dass** mindestens eine Schraube (8, 15) das Abstandselement (1) durchgreift und zur Befestigung des Grundkörpers (2) an dem Untergrund oder einem Montagemittel (6), insbesondere in Form einer Montageplatte bzw. Bodenklebeplatte, dient.

6. Befestigungsvorrichtung nach Anspruch 5, **dadurch gekennzeichnet, dass** die Montageplatte (6) mittels Kleber oder Befestigungsmitteln, insbesondere Schrauben oder Nieten, am Untergrund befestigbar ist.

7. Befestigungsvorrichtung nach einem der vorhergehenden Ansprüche, **dadurch gekennzeichnet, dass** auf dem Befestigungsmittel (3) Klebstoff (7), insbesondere in Bahnen bzw. raupenförmig, vollflächig oder matrixförmig auf der dem Grundkörper (2) abgewandten Seite aufgebracht ist.

8. Befestigungsvorrichtung nach einem der vorhergehenden Ansprüche, **dadurch gekennzeichnet, dass** der Klebstoff (7) ein Ein- oder Mehrkomponentenkleber, insbesondere Glasklebersilikon ist.

9. Befestigungsvorrichtung nach einem der vorhergehenden Ansprüche, **dadurch gekennzeichnet, dass** der Klebstoff in 2-20mm, vorzugsweise in 5-18mm, besonders bevorzug in 15mm breiten Raupen auf dem Befestigungsmittel (3) aufgetragen oder auftragbar ist.

10. Befestigungsvorrichtung nach einem der vorhergehenden Ansprüche, **dadurch gekennzeichnet, dass** Abstandshalter die Module (5) zueinander auf Abstand halten.

11. Befestigungsvorrichtung nach einem der vorhergehenden Ansprüche, **dadurch gekennzeichnet, dass** der Grundkörper (2) mindestens ein Loch (13, 13a, 13b, 13c), insbesondere ein Langloch, zur Befestigung eines Befestigungsmittels (3) aufweist, derart, dass das Befestigungsmittel (3) nach dem Befestigen der Befestigungsvorrichtung auf dem Untergrund relativ zum Grundkörper (2) in verschiedenen Positionen an diesem befestigbar ist.

12. Befestigungsvorrichtung nach einem der vorhergehenden Ansprüche, **dadurch gekennzeichnet, dass** das Befestigungsmittel (3) mindestens ein Loch (20), insbesondere ein Langloch, zur Befestigung am Grundkörper (1) aufweist, derart, dass das Befestigungsmittel (3) nach dem Befestigen der Befestigungsvorrichtung auf dem Untergrund relativ zum Grundkörper (2) in verschiedenen Positionen an diesem befestigbar ist.

13. Befestigungsvorrichtung nach Anspruch 11 und 12, **dadurch gekennzeichnet, dass** sowohl der Grundkörper (2) als auch jedes Befestigungsmittel (3) jeweils mindestens ein Langloch (13c, 20) aufweisen, welche insbesondere in einem Winkel zueinander angeordnet sind.

14. Befestigungsvorrichtung nach einem der vorhergehenden Ansprüche, **dadurch gekennzeichnet, dass** an dem Grundkörper (2) symmetrisch zum Abstandselement (1) zwei oder vier Befestigungsmittel (3) befestigt oder befestigbar sind.
